# EUROPÄISCHE PATENTSCHRIFT

(11) **EP 0 507 088 B1**
(45) Veröffentlichungstag und Bekanntmachung des Hinweises auf die Patenterteilung: **27.04.1994**
(21) Anmeldenummer: 92103520.0
(22) Anmeldetag: 29.02.1992
(51) Int. Cl.: B62K 25/08, B62K 21/02

(54) **Radaufhängung für ein lenkbares Vorderrad eines Motorrades**
Wheel suspension for a steerable front wheel of a motorcycle
Suspension pour une roue avant directrice d'une motocyclette

(30) Priorität: 05.04.1991 DE 4110954
(43) Veröffentlichungstag der Anmeldung: 07.10.1992
(73) Patentinhaber: Bayerische Motoren Werke Aktiengesellschaft, 80788 München (DE)
(72) Erfinder: Seidl, Josef, W-8312 Dingolfing (DE)

(56) Entgegenhaltungen:
- DE-A- 3 708 579
- DE-U- 8 701 846
- GB-A- 1 008 997
- GB-A- 1 319 703

## Beschreibung

Die Erfindung bezieht sich auf eine Radaufhängung für ein lenkbares Vorderrad eines Motorrades nach dem Oberbegriff des Hauptanspruchs.

Eine bekannte Radaufhängung zeigt die DE-OS 37 08 579. Das Vorderrad ist bei dieser Lösung über eine übliche Teleskopgabel am Motorradrahmen aufgehängt. Die Teleskopgabel selbst besteht aus unteren Gleitrohren, die die Achswelle des Vorderrades aufnehmen. Am oberen Ende sind sie mit einer Gabelbrücke zusammengehalten, an der über ein Kugelgelenk ein Längslenker angreift. Der Längslenker ist mit seinem anderen Ende um eine quer zur Fahrzeuglängsachse verlaufende horizontale Achse schwenkbar am Motorradrahmen gelagert.

In den Gleitrohren sind in bekannter Weise verschiebbar Standrohre gehalten, eine obere Gabelbrücke verbindet diese beiden Standrohre. Die Gabelbrücke selbst ist über ein Kardangelenk an der zu den Lenkstangen führenden Lenkwelle angeschlossen. Diese gelenkige Anordnung verhindert ein Mitschwingen der Lenkstangen beim Einfedern des Vorderrades; es handelt sich hierbei um eine sogenannte Kippentkoppelung. Andererseits verursacht aber die Lösung zusätzliche Kosten und Gewicht.

Aufgabe der Erfindung ist es, bei einer gattungsgemäßen Radaufhängung eine Kippentkoppelung für die Lenkstangen vorzusehen, die weniger aufwendig ist und sich dabei gewichtsmäßig günstiger darstellt.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung sind die Standrohre jedes für sich über ein Kugelgelenk an der Gabelbrücke gelagert. Die Gabelbrücke selbst ist starr über eine Lenkwelle mit den Lenkstangen verbunden. Damit entfällt das schwere Kardangelenk nach dem Stand der Technik. Die Kugelgelenke können verhältnismäßig klein ausgeführt werden, so daß sie nur einen geringen Gewichtszuwachs verursachen. Nach der Erfindung wird mit vergleichsweise geringem Aufwand an Kosten eine Entkoppelung der Lenkstangen erzielt. Die Fertigung der oberen Gabelbrücke wird verbilligt, da die Bohrungen für die Standrohre aufgrund der Kugelgelenke nicht absolut parallel ausgeführt werden müssen. Das Ansprechverhalten der Federung bleibt erhalten.

Um eine einwandfreie Lagerung der um die Lenkachse drehenden oberen Gabelbrücke zu erreichen, sieht die Erfindung in einer vorteilhaften Ausgestaltung an der Gabelbrücke einen als Lenkwelle dienenden Wellenzapfen vor. Dieser Zapfen läßt sich durch Lenklager genügend breiter Basis in einem entsprechenden Befestigungsabschnitt des Motorradrahmens anordnen.

Besonders vorteilhaft ist es, für den Wellenzapfen ein oberes und ein unteres Lenklager vorzusehen. Diese Anordnung erlaubt es, das untere Lenklager in horizontaler Richtung elastisch auszulegen. Der Hintergrund für diese Maßnahme liegt darin, daß ganz generell bei Vorderradaufhängungen mit Längslenkern zwischen dem Motorradrahmen und der unteren Gabelbrücke aufgrund der Kinematik beim Einfedern während eines Lenkeinschlages eine Verspannung der Standrohre auftreten kann. Durch das untere elastische Lenklager können diese Verspannung ausgeglichen werden.

Zu diesem Zweck ist es ebenfalls darüber hinaus vorteilhaft, die Lenkwelle zwischen den beiden Lenklagern mit einem nachgiebigen Abschnitt vorzusehen. In diesem Fall kann auf die Elastizität des unteren Lenklagers verzichtet werden.

Weitere Vorteile der Erfindung ergeben sich aus der nachfolgenden Beschreibung eines Ausführungsbeispiels, die sich an der dazugehörigen Zeichnung orientiert. Es zeigen
- Figur 1: in schematischer Darstellung den vorderen Abschnitt eines Motorrads mit stilistisch angedeuteter erfindungsgemäßen Radaufhängung,
- Figur 2: die für das Verständnis der Erfindung wesentlichen Teile der Vorderradaufhängung nach Figur 1 in vergrößertem Maßstab und in konkreterer Darstellung und
- Figur 3: ebenfalls wieder in stilisierter Darstellung die Vorderradaufhängung nach Figur 1, wobei das Vorderrad um 90 ° zum Betrachter hin gedreht und ausgefedert ist.

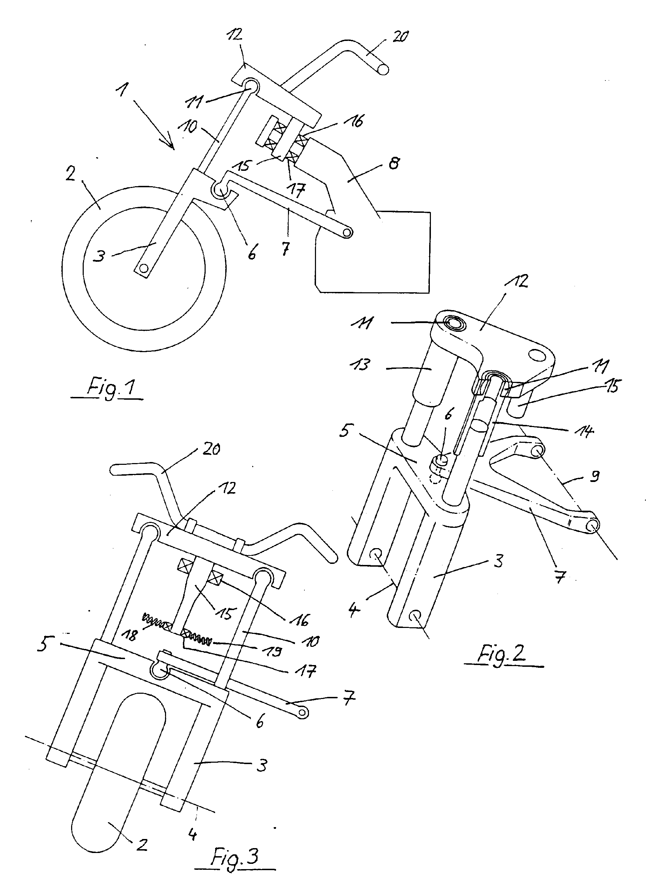

Die Radaufhängung für ein lenkbares Vorderrad eines Motorrades weist nach Figur 1 eine Teleskopgabel 1 auf, die gebildet ist aus zwei sich beidseitig eines Vorderrades 2 erstreckenden unteren Gleitrohren 3 (Figur 3). An ihren unteren Abschnitten nehmen die Gleitrohre 3 eine Achswelle des Vorderrades 2 auf. Die Achswelle selbst ist nicht gezeichnet, jedoch steht für sie symbolisch in Figur 2 und 3 eine Achslinie 4. Die oberen Abschnitte der Gleitrohre 3 sind zusammengehalten über eine untere Gabelbrücke 5. An dieser Gabelbrücke 5 greift über ein Kugelgelenk 6 ein sich in Fahrzeuglängsrichtung erstreckender Längslenker 7 an. Der Längslenker 7 ist am Motorradrahmen, der in Figur 1 wiederum stilisiert mit 8 dargestellt ist, schwenkbar gehalten. Dabei verläuft die Schwenkachse 9 (Figur 2) quer zur Fahrzeuglängsrichtung in horizontaler Richtung.

In den Gleitrohren 3 sind verschiebbar Standrohre 10 gehalten. Die oberen Abschnitte der Standrohre 10 sind über jeweils ein eigenes Kugelgelenk 11 nach allen Seiten schwenkbar in einer weiteren oberen Gabelbrücke 12 gelagert. Wird die Gabel als sogenannte "Upside-down" Gabel ausgeführt (Figur 2), weisen die Standrohre 13 und 14 im Bereich der Gabelbrücke 12 einen im Durchmesser verjüngten Aufnahmeabschnitt auf. Mit diesem Aufnahmeabschnitt 14 sind sie in die innere Lagerschale der Kugelgelenke 11 eingepreßt. Die äußeren Lagerschalen der Kugelgelenke 11 werden in der Gabelbrücke 12 gehalten.

Die Gabelbrücke 12 weist nach dem Ausführungsbeispiel in etwa eine Dreiecksform auf, wobei die Trägerspitze zum Motorradrahmen hin zeigt. In diesem Abschnitt ist an der Gabelbrücke 12 ein nach unten verlaufender Wellenzapfen befestigt, der als Lenkwelle 15 dient. Nach Figur 1 ist die Lenkwelle 15 mit einem oberen Lenklager 16 und einem unteren Lenklager 17 um die Lenkachse drehbar im Motorradrahmen 8 gehalten.

Schließlich sind an der Oberseite der Gabelbrücke 12 starr Lenkstangen 20 befestigt, über die die Lenkbewegungen des Vorderrades 2 eingeleitet werden können.

Nach Figur 3 ist das untere Lenklager durch ein elastisches Lenklager 17' ersetzt. Dabei soll das Lenklager 17' in horizontaler Richtung nachgeben, was durch federnde Symbole 18, 19 angedeutet wird. Desweiteren ist der Abschnitt zwischen dem oberen Lenklager 16 und dem unteren elastischen Lager 17' der Lenkwelle 15 ebenfalls in sich nachgiebig ausgelegt, was wiederum durch einen verringerten Querschnitt der Lenkwelle 15 angedeutet sein soll.

Die Zweckmäßigkeit eines elastischen Lenklagers 17' soll kurz anhand der Figur 3 erläutert werden. Beim Einfedern der Teleskopgabel führt der Längslenker 7 um seine Achse am Motorradrahmen eine Schwenkbewegung aus. Dabei beschreibt das Universalgelenk 6 und damit die untere Gabelbrücke 5 einen Kreisbogen. Wird dabei zugleich über die Lenkstangen 20 das Vorderrad eingeschlagen, stellen sich die Standrohre 10 bzw. die Gleitrohre 3 schiefwinkelig zur oberen Gabelbrücke 12. Dadurch verändert sich der von der unteren Gabelbrücke 5 auf die oberen Abschnitte der Standrohre 10 bzw. die Gabelbrücke 12 projezierte Abstand. Die Folge ist eine Verspannung der Teleskopgabel. Um diese Verspannung auszugleichen, sieht die Erfindung, wie erwähnt, das elastische Lager 17' bzw. den nachgiebigen Abschnitt der Lenkwelle 15 vor.

## Patentansprüche

1. Radaufhängung für ein lenkbares Vorderrad eines Motorrades mit einer Teleskopgabel, bei der die die Achswelle des Vorderrades aufnehmenden Gleitrohre mit einer unteren Gabelbrücke verbunden sind und bei der die in den Gleitrohren verschiebbar gehaltenen Standrohre über eine obere Gabelbrücke gelenkig an den Lenkstangen angeordnet sind, wobei an der unteren Gabelbrücke über ein Kugelgelenk ein um eine Querachse schwenkbar am Motorradrahmen angeordneter Längslenker angreift, dadurch gekennzeichnet, daß die obere Gabelbrücke (12) mit den Lenkstangen (20) starr verbunden und jedes Standrohr (10) in der oberen Gabelbrücke (12) über ein Kugelgelenk (11) schwenkbar gehalten ist.

2. Radaufhängung nach Anspruch 1, dadurch gekennzeichnet, daß die obere Gabelbrücke (12) mit einem als Lenkwelle (15) dienenden Wellenzapfen im Rahmen (8) des Motorrades um die Lenkachse drehbar gelagert ist.

3. Radaufhängung nach Anspruch 2, dadurch gekennzeichnet, daß die Lenkwelle (15) durch ein oberes und unteres Lenklager (16 und 17') im Motorradrahmen (8) gehalten ist, wobei das untere Lenklager (17') in horizontaler Richtung elastisch ist.

4. Radaufhängung nach Anspruch 3, dadurch gekennzeichnet, daß die Lenkwelle (15) zwischen dem oberen und unteren Lenklager (16, 17 und 17') einen nachgiebigen Abschnitt aufweist.

## Claims

1. A wheel suspension for a steerable front wheel of a motorcycle with a telescopic fork, in which the guide tubes accommodating or supporting the axle shaft of the front wheel are joined together by means of a lower fork bridge and in which the tubes or stanchions slidingly held in the guide tubes are arranged in an articulated manner via an upper fork bridge on the handlebars, a trailing link being arranged on the motorcycle frame such that it can swivel about a transverse axis and engage with the lower fork bridge, characterised in that the upper fork bridge (12) is rigidly connected to the handlebars (20) and that each tube or stanchion (10) is held by the upper fork bridge (12) via a ball joint (11) so that it can swivel.

2. A wheel suspension according to claim 1, characterised in that the upper fork bridge (12) which is provided with a shaft journal serving as a steering shaft (15) is arranged on the frame (8) of the motorcycle so that it can rotate about the steering axis.

3. A wheel suspension according to claim 2, characterised in that the steering shaft (15) is held by an upper and a lower steering bearing (16 and 17') on the motorcycle frame (8), the lower steering bearing (17') being elastic or resilient in a horizontal direction.

4. A wheel suspension according to claim 3, characterised in that the steering shaft (15) has an elastic or resilient section between the upper and lower steering bearings (16, 17 and 17').

## Revendications

1. Suspension de roue pour une roue avant directrice d'une motocyclette munie d'une fourche télescopique, dans laquelle les tubes coulissants recevant l'axe de la roue avant sont reliés par une traverse inférieure de fourche, et dans laquelle les tubes verticaux maintenus de façon à pouvoir glisser dans les tubes coulissants sont disposés sur les bras de guidon au moyen d'une traverse supérieure de fourche, un bras oscillant longitudinal disposé sur le cadre de la motocyclette de façon à pouvoir pivoter autour d'un axe transversal, venant en prise sur la traverse inférieure de fourche par l'intermédiaire d'un joint à rotule, suspension de roue caractérisée en ce que la traverse supérieure de fourche (12) est reliée rigidement aux bras de guidon (20), et chaque tube vertical (10) est maintenu dans la traverse supérieure de fourche (12) par l'intermédiaire d'un joint à rotule (11) de façon à pouvoir pivoter.

2. Suspension de roue selon la revendication 1, caractérisée en ce que la traverse supérieure de fourche (12) est montée de façon à pouvoir tourner autour de l'axe de direction dans le cadre (8) de la motocyclette, avec un tourillon d'arbre servant d'arbre de direction (15).

3. Suspension de roue selon la revendication 2, caractérisée en ce que l'arbre de direction (15) est maintenu par un palier de direction supérieur et un palier de direction inférieur (16 et 17') dans le cadre de la motocyclette (8), le palier inférieur de direction (17') étant élastique dans le sens horizontal.

4. Suspension de roue selon la revendication 3, caractérisée en ce que l'arbre de direction (15) présente une section flexible entre le palier supérieur et le palier inférieur (16, 17 et 17').
